# EUROPEAN PATENT SPECIFICATION

(11) **EP 3 065 490 B1**
(45) Date of publication and mention of the grant of the patent: **27.12.2017**
(21) Application number: 14858570.6
(22) Date of filing: 30.10.2014
(51) Int. Cl.: H04W 72/04, H04W 76/02

(54) **MOBILE COMMUNICATION METHOD AND SYSTEM FOR PERFORMING CARRIER AGGREGATION**
MOBILKOMMUNIKATIONSVERFAHREN UND SYSTEM ZUR DURCHFÜHRUNG VON TRÄGERAGGREGATION
SYSTÈME ET PROCÉDÉ DE COMMUNICATION MOBILE ET POUR EFFECTUER UNE AGRÉGATION DE PORTEUSES

(30) Priority: 31.10.2013 JP 2013227526
(43) Date of publication of application: 07.09.2016
(73) Proprietor: NTT DOCOMO, INC., Chiyoda-ku Tokyo 100-6150 (JP)
(72) Inventor: HAPSARI, Wuri Andarmawanti, Tokyo 100-6150 (JP); TAKAHASHI, Hideaki, Tokyo 100-6150 (JP); UCHINO, Tooru, Tokyo 100-6150 (JP)
(74) Representative: Hoffmann Eitle
(86) International application number: PCT/JP2014/078886
(87) International publication number: WO 2015/064686

(56) References cited:
- EP-A1- 2 339 890
- EP-A2- 2 525 514
- WO-A1-2012/163423
- WO-A1-2013/064980
- CA-A1- 2 850 727
- US-A1- 2013 250 910
- INTEL CORPORATION: "Challenges in the uplink to support dual connectivity", 3GPP DRAFT; R2-131986, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130525 11 May 2013 (2013-05-11), XP050700113, Retrieved from the Internet: URL:http://www.3gpp.org/ftp/tsg_ran/WG2_RL 2/TSGR2_82/Docs/ [retrieved on 2013-05-11]
- ERICSSON ET AL: "Extension of supported bandwidth combinations for carrier aggregation", 3GPP DRAFT; R4-120634, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Dresden, Germany; 20120206 - 20120210, 30 January 2012 (2012-01-30), XP050568264, [retrieved on 2012-01-30]
- SAMSUNG: 'SCE CP architecture, main scenarios' 3GPP TSG-RAN2#83 BIS MEETING, R2-133186, 3GPP XP050719117
- INTEL CORPORATION (RAPPORTEUR: 'Summary of email discussion [82#18][LTE/SCE] UE capabilities' 3GPP TSG RAN WG2 MEETING #83, R2- 132814, 3GPP 23 August 2013, XP050718536
- PANTECH: 'UL transmission on dual connectivity' 3GPP TSG-RAN WG2 MEETING #82, R2-131802, 3GPP 24 May 2013, XP050700057
- SAMSUNG: 'Discussion on UP protocol stack options in inter-ENB Carrier Aggregation' 3GPP TSG-RAN WG2 MEETING #81BIS, R2-131070, 3GPP 19 April 2013, XP050699238

## Description

### TECHNICAL FIELD

The present invention relates to a mobile communication method.

### BACKGROUND ART

Presently, in 3GPP, architectures to realize "Inter-eNB CA (Carrier Aggregation)" as WI (Working Item) of SCE (Small Cell Enhancement) are being discussed.

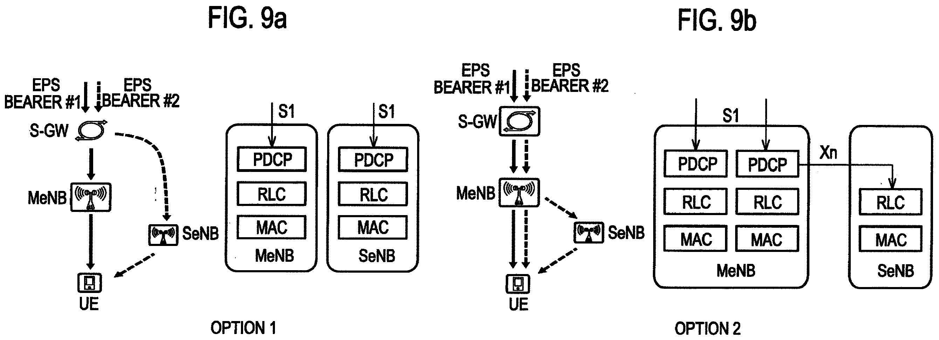

Specifically, a detailed study regarding two architectures, i.e., "Option 1" shown in FIG. 9 (a) and "Option 2" shown in FIG. 9(b), will be undertaken.

In the "Option 1" architecture, as shown in FIG. 9(a), a serving gateway device S-GW routes a downlink signal that is addressed to a mobile station UE to a radio base station MeNB (Master eNB) or a radio base station SeNB (Secondary eNB) .

In the "Option 1" architecture, each of the radio base station MeNB and the radio base station SeNB includes PDCP (Packet Data Convergence Protocol) layer function, and "Bearer split" in which one EPS bearer is set via two radio base stations eNB cannot be implemented.

On the other hand, in the "Option 2" architecture, as shown in FIG. 9(b), the radio base station MeNB routes a downlink signal that is addressed to the mobile station UE to the radio base station SeNB.

In the "Option architecture, only the radio base station MeNB includes the PDCP layer function, and the "Bearer

Amendments for prosecution in the EPO regional phase split" can be implemented.

### PRIOR ART DOCUMENT

### NON-PATENT DOCUMENT

Non-Patent Document 1: 3GPP TR36.842, "Study on Small Cell Enhancements for E-UTRA and E-UTRAN - Higher layer aspects"

Patent application CA2850727 A1 discloses CoMP transmission point modifications using UL and DL fields in a RRC Connection Reconfiguration message.

Patent application EP2525514 A2 discloses modifications in Component Carriers during Carrier Aggregation by using RRC messages.

Patent application WO2102/163423 A1 discloses inter-site Carrier Aggregation having only single component carrier available in uplink direction.

### SUMMARY OF THE INVENTION

The SCE aims at enhancing throughput of a mobile station UE while maintaining the quality of Mobility of the mobile station UE.

From the point of view of the throughput enhancement, enhancement of throughput in downlink, in particular, is in focus.

When realizing the "Inter-eNB CA" by using the "Option 2" architecture, the "Inter-eNB CA" can be performed in both of the downlinks and both of the uplinks, in other words, "2DL, 2UL" "Inter-eNB CA" can be performed.

However, in realizing the "Inter-eNB CA" in both of the uplinks, in other words, in realizing "2UL" "Inter-eNB CA" , there was a problem that the impact on the mobile station UE was significant.

To reduce the complexity of the processing performed in the mobile station UE, an approach of realizing "2DL, 1UL" "Inter-eNB CA" in which an uplink signal is transmitted by using either the radio base station MeNB or the radio base station SeNB, along with realizing the "Inter-eNB CA" in downlink by the "Bearer split", is being considered.

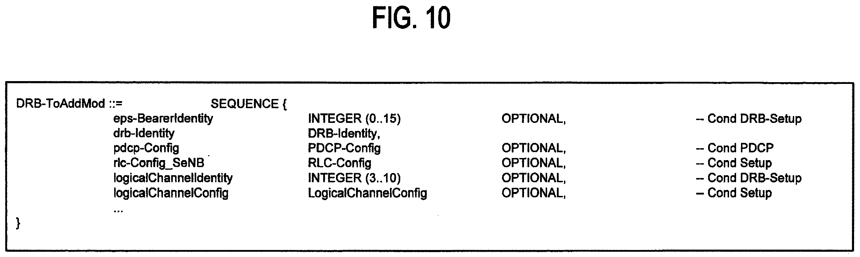

However, in the existing LTE (Long Term Evolution) system, as shown in FIG. 10, an information element "DRB-ToAddMod" , which is used to add a bearer or modify setting contents of the bearer, is configured to instruct to add a bearer or modify the setting contents of the bearer without being aware of downlink and uplink.

Therefore, in the information element "DRB-ToAddMod", there was a problem that the "2DL, 1UL" "Inter-eNB CA" explained above could not be realized.

The present invention has been made in view of the above circumstances. It is an object of the present invention to provide a mobile communication method that is capable of realizing the "2DL, 1UL" "Inter-eNB CA".

The scope of the invention is defined by the appended independent claims 1 and 3.

### BRIEF DESCRIPTION OF DRAWINGS

FIG. 1 is an overall structural diagram of a mobile communication system according to an embodiment of the present invention.
FIG. 2 is a sequence diagram for explaining a downlink bearer in the mobile communication system according to the embodiment of the present invention.
FIG. 3 is a sequence diagram for explaining an uplink bearer in the mobile communication system according to the embodiment of the present invention.
FIG. 4 is a sequence diagram for explaining an uplink bearer in the mobile communication system according to the embodiment of the present invention.
FIG. 5 is a sequence diagram for explaining an operation of the mobile communication system according to the embodiment of the present invention.
FIG. 6 is a diagram that shows an example of a format of an information element "DRB-ToAddMod_SeNB" that is used in the mobile communication system according to the embodiment of the present invention.
FIG. 7 is a diagram that shows an example of a format of an information element "DRB-ToAddMod" that is used in the mobile communication system according to the embodiment of the present invention.
FIG. 8 is a diagram that shows an example of a format of the information element "DRB-ToAddMod" that is used in the mobile communication system according to the embodiment of the present invention.
FIG. 9 is a view for explaining an architecture to realize the conventional "Inter-eNB CA (Carrier Aggregation)".
FIG. 10 is a view for explaining an example of a format of a conventional information element "DRB-ToAddMod".

### MODES FOR CARRYING OUT THE INVENTION

### Mobile Communication System According to Embodiment of Present Invention

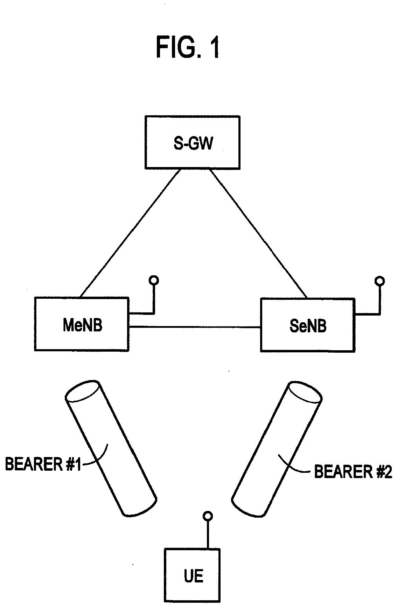

Referring to FIGS. 1 to 8, a mobile communication system according to an embodiment of the present invention is explained below.

The mobile communication system according to the present embodiment is a mobile communication system of the LTE system (or, LTE-Advanced system). The mobile communication system includes, as shown in FIG. 1, a serving gateway device S-GW, a radio base station MeNB, and a radio base station SeNB.

In the mobile communication system according to the present embodiment, as shown in FIG. 1, a bearer #1 is set between the radio base station MeNB and a mobile station UE, and a bearer #2 is set between the radio base station SeNB and the mobile station UE.

In the mobile communication system according to the present embodiment, the "2DL, 1UL" "Inter-eNB CA" is realized.

In other words, in the mobile communication system according to the present embodiment, the "2DL, 1UL" "Inter-eNB CA" in which an uplink signal is transmitted by using either the radio base station MeNB or the radio base station SeNB is realized, along with realizing the "Inter-eNB CA" in downlink by the "Bearer split".

Specifically, in the downlink, the "Option 2" architecture shown in FIG. 9(b) is used, and the radio base station MeNB transmits to the mobile station UE the downlink signal that is addressed to the mobile station UE via the bearer #1, and routes the downlink signal that is addressed to the mobile station UE to the radio base station SeNB.

On the other hand, in the uplink, the "Option 1" architecture shown in FIG. 9 (a) is used, and the mobile station UE transmits the uplink signal via either the bearer #1 or the bearer #2.

In the mobile communication system according to the present embodiment, which bearer between the bearer #1 and the bearer #2 shall be used by the mobile station UE to transmit the uplink signal is set by "RRC Connection Reconfiguration", and it is possible to configure so that this setting cannot be dynamically modified for each subframe.

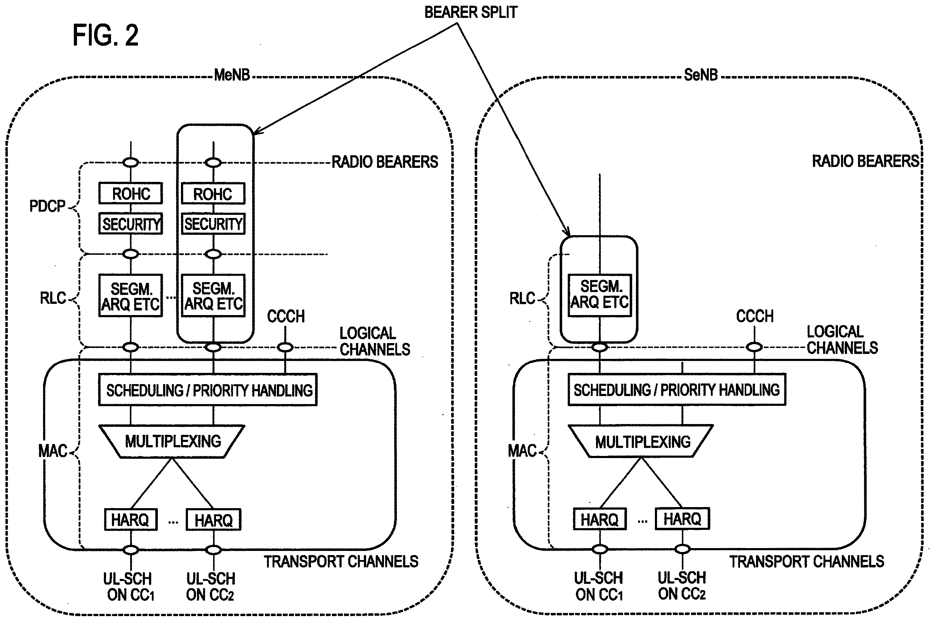

FIG. 2 shows a configuration for downlink when the "2DL, 1UL" "Inter-eNB CA" is being performed.

As shown in FIG. 2, the radio base station MeNB includes, as the configuration for downlink, PDCP layer function, RLC (Radio Link Control) layer function, and MAC (Media Access Control) layer function.

On the other hand, as shown in FIG. 2, the radio base station SeNB includes, as the configuration for downlink, the RLC layer function and the MAC layer function, but does not include the PDCP layer function.

The PDCP layer function of the radio base station MeNB sets "Security context" of the mobile station UE, and performs a security process in a bearer for downlink.

The PDCP layer function of the mobile station UE sets, to perform the security process in the bearer for downlink, the "Security context" set by the PDCP layer function of the radio base station MeNB.

Moreover, the PDCP layer function of the radio base station MeNB performs RoHC (Robust Header Compression) process in the bearer for downlink.

Alternatively, as shown in FIG. 2, when "MAC-ID" is not set in the downlink signal transmitted from the radio base station MeNB (or, when "MAC-ID = 0" is set), "MAC-ID = 1" can be set in the downlink signal transmitted from the radio base station SeNB.

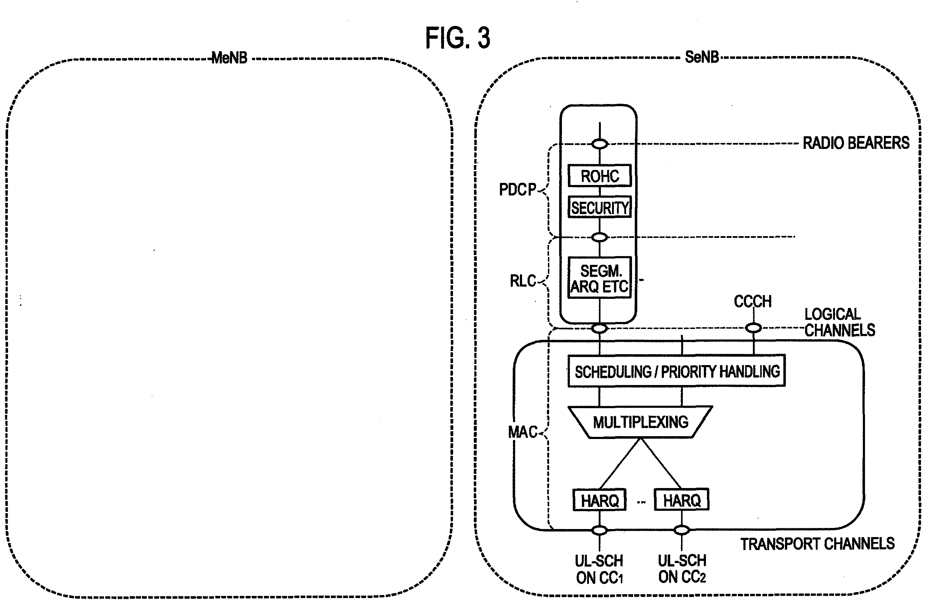

FIG. 3 shows a configuration for uplink when the "2DL, 1UL" "Inter-eNB CA" is being performed. FIG. 3 shows a configuration for uplink for a situation where the mobile station UE transmits the uplink signal via the bearer #2.

As shown in FIG. 3, the radio base station SeNB includes, as the configuration for uplink, the PDCP layer function, the RLC layer function, and the MAC layer function.

On the other hand, as shown in FIG. 3, the radio base station MeNB does not include the configuration for uplink.

The PDCP layer function of the radio base station SeNB sets the "Security context" of the mobile station UE, and performs a security process in a bearer for uplink.

The PDCP layer function of the mobile station UE sets, to perform the security process in the bearer for uplink, the "Security context" set by the PDCP layer function of the radio base station SeNB.

Moreover, the PDCP layer function of the radio base station SeNB performs the RoHC process in the bearer for uplink.

Alternatively, as shown in FIG. 3, the mobile station UE can set, according to the settings performed by the "RRC Connection Reconfiguration", the "MAC-ID = 1" in the uplink signal to be transmitted to the radio base station SeNB.

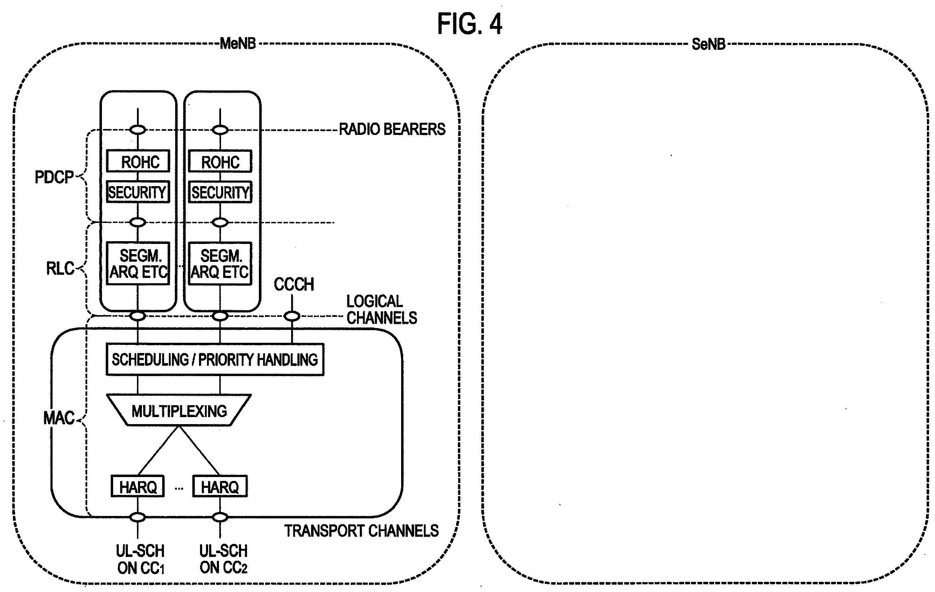

FIG. 4 shows a configuration for uplink when the "2DL, 1UL" "Inter-eNB CA" is being performed. FIG. 4 shows a configuration for uplink for a situation where the mobile station UE transmits the uplink signal via the bearer #1.

As shown in FIG. 4, the radio base station MeNB includes, as the configuration for uplink, the PDCP layer function, the RLC layer function, and the MAC layer function.

On the other hand, as shown in FIG. 4, the radio base station SeNB does not include the configuration for uplink.

The PDCP layer function of the radio base station MeNB sets the "Security context" of the mobile station UE, and performs a security process in the bearer for uplink.

The PDCP layer function of the mobile station UE sets, to perform the security process in the bearer for uplink, the "Security context" set by the PDCP layer function of the radio base station MeNB.

Moreover, the PDCP layer function of the radio base station MeNB performs the RoHC process in the bearer for uplink.

Alternatively, as shown in FIG. 4, the mobile station UE can set, according to the settings performed by the "RRC Connection Reconfiguration" , the "MAC-ID = 0" in the uplink signal to be transmitted to the radio base station MeNB.

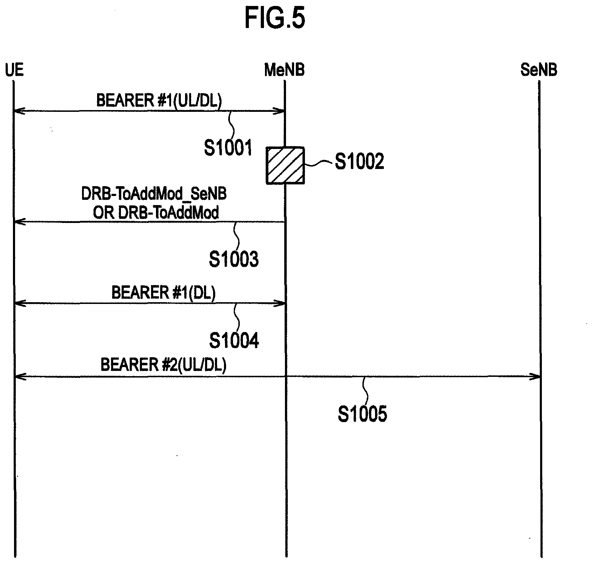

Referring to FIG. 5, an example of a concrete operation of the mobile communication system according to the present embodiment is explained below.

As shown in FIG. 5, at Step S1001, the bearer #1 is set between the mobile station UE and the radio base station MeNB, and in this state, at Step S1002, the radio base station MeNB determines to perform the "2DL, 1UL" "Inter-eNB CA" with the radio base station SeNB. Next, at Step S1003, the radio base station MeNB transmits to the mobile station UE the "RRC Connection Reconfiguration" that includes an information element "DRB-ToAddMod_SeNB" or "DRB-ToAddMod".

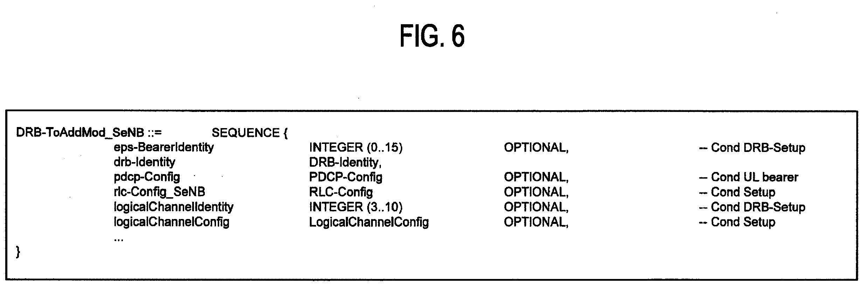

An example of a format of the information element "DRB-ToAddMod_SeNB" or "DRB-ToAddMod" is shown in FIGS. 6 to 8.

The mobile station UE, according to the information element "DRB-ToAddMod_SeNB" or "DRB-ToAddMod", modifies the settings of the bearer #1 at Step S1004, and adds the bearer #2 at Step S1005, so that the downlink signal is received via the bearer #1 and the bearer #2 and the uplink signal is transmitted via either the bearer #1 or the bearer #2, in other words, to transmit the uplink signal via either the bearer #1 or the bearer #2.

The mobile station UE, upon receiving the information element "DRB-ToAddMod_SeNB" shown in FIG. 6, can modify the setting contents of the bearer #1 so that the bearer #1 acts as the bearer for downlink and can add the bearer #2 as a bearer for downlink and uplink.

Alternatively, the mobile station UE, upon receiving the information element "DRB-ToAddMod_SeNB" shown in FIG. 6, can retain the setting contents of the bearer #1 and can add the bearer #2 as the bearer for downlink.

For example, when "PDCP-config" has been set in the information element "DRB-ToAddMod_SeNB", the mobile station UE can modify the settings of the bearer #1 and can add the bearer #2 to transmit the uplink signal via the bearer #2.

Specifically, in this situation, the mobile station UE can associate the "PDCP-config", which includes the setting contents related to the bearer for uplink, with the radio base station SeNB (SeNB-ID).

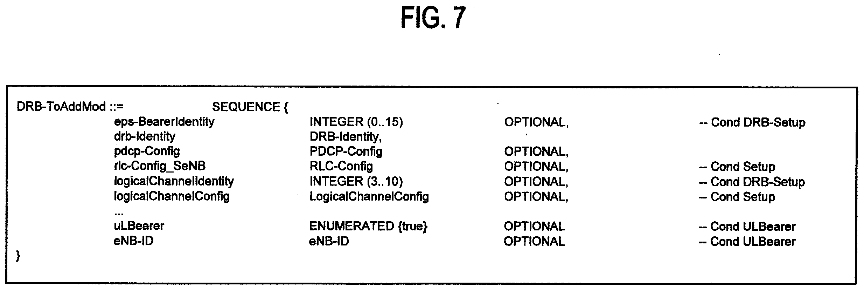

Moreover, the mobile station UE, upon receiving the information element "DRB-ToAddMod" shown in FIG. 7, can modify the setting contents of the bearer #1 so that the bearer #1 acts as the bearer for downlink and can add the bearer #2 as the bearer for downlink and uplink.

For example, when the "PDCP-config" has been set in the information element "DRB-ToAddMod" (and, when MAC-ID = 1 is set), the mobile station UE can modify the settings of the bearer #1 and can add the bearer #2 to transmit the uplink signal via the bearer #2.

Specifically, in this situation, the mobile station UE can associate the "PDCP-config", which includes the setting contents related to the bearer for uplink, with the radio base station SeNB (SeNB-ID).

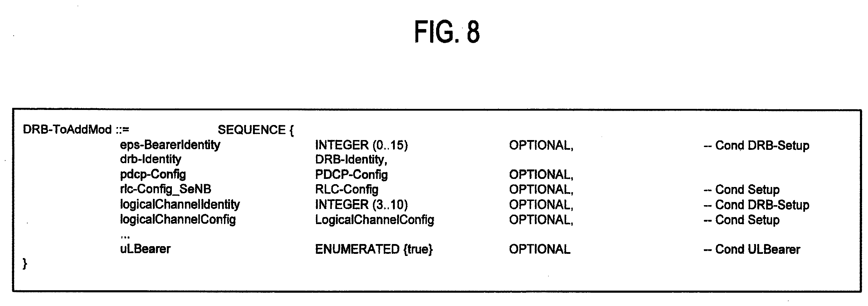

Furthermore, the mobile station UE, upon receiving the information element "DRB-ToAddMod" shown in FIG. 8, can retain the setting contents of the bearer #1 and can add the bearer #2 as the bearer for downlink.

For example, when the "PDCP-config" has been set in the information element "DRB-ToAddMod" (and, when MAC-ID is not set), the mobile station UE can modify the settings of the bearer #1 and can add the bearer #2 to transmit the uplink signal via the bearer #1.

Specifically, in this situation, the mobile station UE can associate the "PDCP-config", which includes the setting contents related to the bearer for uplink, with the radio base station MeNB (MeNB-ID).

The characteristics of the present embodiment explained above can be expressed as follows.

According to a first aspect of the present embodiment, a mobile communication method includes a step in which a radio base station MeNB (a first radio base station) transmits, when a bearer #1 (a first bearer) has been set between a mobile station UE and the radio base station MeNB, to the mobile station UE an information element "DRB-ToAddMod_SeNB" or "DRB-ToAddMod" that instructs to add a bearer #2 (a second bearer) between a radio base station SeNB (a second radio base station) and to modify settings of the bearer #1; and a step in which the mobile station UE, according to the information element "DRB-ToAddMod_SeNB" or "DRB-ToAddMod", modifies the settings of the bearer #1 and adds the bearer #2 to receive a downlink signal via the bearer #1 and the bearer #2 and transmit an uplink signal via either the bearer #1 or the bearer #2.

According to the above aspect, the "2DL, 1UL" "Inter-eNB CA" can be realized while reducing the complexity of the processing performed in the mobile station UE.

In the first aspect of the present embodiment, a step A can include the radio base station MeNB transmitting the information element "DRB-ToAddMod_SeNB" or "DRB-ToAddMod" to the mobile station UE by the "RRC Connection Reconfiguration".

In the first aspect of the present embodiment, a step B can include, when "PDCP-config" has been set in the information element "DRB-ToAddMod", the mobile station UE modifying the settings of the bearer #1 and adding the bearer #2 to transmit the uplink signal via the bearer #1.

In the first aspect of the present embodiment, the step B includes, when the "PDCP-config" has been set in the information element "DRB-ToAddMod_SeNB", the mobile station UE modifying the settings of the bearer #1 and adding the bearer #2 to transmit the uplink signal via the bearer #2.

According to a second aspect of the present embodiment, in a mobile communication system in which a mobile station UE is capable of performing the "Inter-eNB CA (carrier aggregation) "by using a radio base station MeNB and a radio base station SeNB, when the "Inter-eNB CA" is being performed, PDCP layer function corresponding to a bearer for downlink is set only in the radio base station MeNB, and PDCP layer function corresponding to a bearer for uplink is set in either the radio base station MeNB or the radio base station SeNB.

In the second aspect of the present embodiment, the PDCP function layer can perform a security process.

In the second aspect of the present embodiment, the PDCP function layer can perform RoHC process.

In the second aspect of the present embodiment, the mobile station UE can associate "PDCP-config (setting contents related to bearers)" with either the radio base station MeNB or the radio base station SeNB.

Operations of the above mobile station UE, the radio base station MeNB / SeNB, and the serving gateway device S-GW can be realized by hardware, can be realized by a software module executed by a processor, or can be realized by the combination of these.

The software module can be arranged in a storage medium having a desired form such as RAM (Random Access Memory), a flash memory, ROM (Read Only Memory), EPROM (Erasable Programmable ROM), EEPROM (Electronically Erasable and Programmable ROM), a register, a hard disk, a removable disk, CD-ROM, and the like.

The storage medium is connected to a processor so that the processor can read / write information from / in the storage medium. Alternatively, the storage medium can be integrated in a processor. Alternatively, the storage medium and the processor can be arranged in ASIC. The ASIC can be arranged in the mobile station UE, the radio base station MeNB / SeNB, and the serving gateway device S-GW. The storage medium and the processor can be arranged as a discrete component in the mobile station UE, the radio base station MeNB / SeNB, and the serving gateway device S-GW.

The present invention has been explained in detail by using the above mentioned embodiments; however, it is obvious for a person skilled in the art that the present invention is not limited to the embodiments explained in the present description. The present invention can be implemented by way of modifications and changes without deviating from the scope of the present invention specified by the claims. Accordingly, the indication of the present description aims at exemplary explanation, and has no intention to limit to the present invention.

### INDUSTRIAL APPLICABILITY

According to the present invention, as explained above, it is possible to provide a mobile communication method that is capable of realizing the "2DL, 1UL" "Inter-eNB CA".

### EXPLANATION OF REFERENCE NUMERALS

- UE: Mobile station
- MeNB, SeNB: Radio base station
- S-GW: Serving gateway device

## Claims

1. A mobile communication method for performing carrier aggregation by using a first base station and a second base station, comprising:
a step A in which the first radio base station (MeNB) transmits (S1003), when a first bearer has been set between a mobile station (UE) and the first radio base station, to the mobile station an information element that instructs to add a second bearer between the second radio base station (SeNB) and to modify settings of the first bearer; and
a step B in which the mobile station, according to the information element, modifies (S1004) the settings of the first bearer and adds (S1005) the second bearer to receive a downlink signal via the first bearer and the second bearer and transmit an uplink signal via either the first bearer or the second bearer, wherein
the step B includes, upon receiving an existing information element "DRB-ToAddMod" as the information element and when "PDCP-config" has been set in the information element "DRB-ToAddMod", the mobile station modifying the settings of the first bearer and adding the second bearer to transmit the uplink signal via the second bearer.

2. The mobile communication method as claimed in Claim 1, wherein
the step A includes the first radio base station transmitting the information element to the mobile station by "RRC Connection Reconfiguration".

3. A mobile communication system in which a mobile station (UE) is capable of performing a carrier aggregation by using a first radio base station (MeNB) and a second radio base station (SeNB), wherein
when the carrier aggregation is being performed, PDCP layer function corresponding to a bearer for downlink is set in only the first radio base station, and PDCP layer function corresponding to a bearer for uplink is set in either the first radio base station or the second radio base station,
the first radio base station (MeNB) is configured to transmits, when a first bearer has been set between a mobile station (UE) and the first radio base station, to the mobile station an information element that instructs to add a second bearer between the second radio base station (SeNB) and to modify settings of the first bearer; and
the mobile station, according to the information element, is configured to modify the settings of the first bearer and add the second bearer to receive a downlink signal via the first bearer and the second bearer and transmit an uplink signal via either the first bearer or the second bearer, wherein
upon receiving an existing information element "DRB-ToAddMod" as the information element and when "PDCP-config" has been set in the information element "DRB-ToAddMod", the mobile station is configured to modify the settings of the first bearer and adding the second bearer to transmit the uplink signal via the second bearer.

4. The mobile communication system as claimed in Claim 3, wherein the PDCP layer function performs a security process.

5. The mobile communication system as claimed in Claim 3 or 4, wherein the PDCP layer function performs RoHC process.

6. The mobile communication system as claimed in Claim 3, wherein the mobile station associates setting contents related to the bearer for uplink with either the first radio base station or the second radio base station.

## Patentansprüche

1. Mobilkommunikationsverfahren zum Durchführen einer Trägeraggregation durch Verwenden einer ersten Basisstation und einer zweiten Basisstation, umfassend:
einen Schritt A, in dem, wenn ein erster Träger zwischen einer Mobilstation (UE) und der ersten Funkbasisstation eingerichtet worden ist, die erste Funkbasisstation (MeNB) ein Informationselement an die Mobilstation überträgt (S1003), das dazu instruiert, einen zweiten Träger zwischen der zweiten Funkbasisstation (SeNB) hinzuzufügen und Einstellungen des ersten Trägers zu modifizieren; und
einen Schritt B, in dem die Mobilstation gemäß dem Informationselement die Einstellungen des ersten Trägers modifiziert (S1004) und den zweiten Träger hinzufügt (S1005), um über den ersten Träger und den zweiten Träger ein Downlink-Signal zu empfangen und über entweder den ersten Träger oder den zweiten Träger ein Uplink-Signal zu übertragen, wobei
der Schritt B bei Empfangen eines existierenden Informationselements "DRB-ToAddMod" als das Informationselement und wenn "PDCP-config" in dem Informationselement "DRB-ToAddMod" eingestellt worden ist, einschließt, dass die Mobilstation die Einstellungen des ersten Trägers modifiziert und den zweiten Träger hinzufügt, um das Uplink-Signal über den zweiten Träger zu übertragen.

2. Mobilkommunikationsverfahren nach Anspruch 1, wobei
der Schritt A einschließt, dass die erste Funkbasisstation das Informationselement durch "RRC-Verbindungsneukonfigurierung" an die Mobilstation überträgt.

3. Mobilkommunikationssystem, in dem eine Mobilstation (UE) befähigt ist, durch Verwenden einer ersten Funkbasisstation (MeNB) und einer zweiten Funkbasisstation (SeNB) eine Trägeraggregation durchzuführen, wobei
wenn die Trägeraggregation durchgeführt wird, eine PDCP-Layer-Funktion, die einem Träger zum Downlink entspricht, lediglich in der ersten Funkbasisstation eingerichtet wird und eine PDCP-Layer-Funktion, die einem Träger zum Uplink entspricht, in entweder der ersten Funkbasisstation oder der zweiten Funkbasisstation eingerichtet wird,
die erste Funkbasisstation (MeNB) dazu konfiguriert ist, wenn ein erster Träger zwischen einer Mobilstation (UE) und der ersten Funkbasisstation eingerichtet worden ist, ein Informationselement, das dazu instruiert, einen zweiten Träger zwischen der zweiten Funkbasisstation (SeNB) hinzuzufügen und Einstellungen des ersten Trägers zu modifizieren, an die Mobilstation zu übertragen; und
die Mobilstation gemäß dem Informationselement dazu konfiguriert ist, die Einstellungen des ersten Trägers zu modifizieren und den zweiten Träger hinzuzufügen, um über den ersten Träger und den zweiten Träger ein Downlink-Signal zu empfangen und über entweder den ersten Träger oder den zweiten Träger ein Uplink-Signal zu übertragen, wobei
bei Empfangen eines existierenden Informationselements "DRB-ToAddMod" als das Informationselement und wenn "PDCP-config" in dem Informationselement "DRB-ToAddMod" eingestellt worden ist, die Mobilstation dazu konfiguriert ist, die Einstellungen des ersten Trägers zu modifizieren und den zweiten Träger hinzuzufügen, um das Uplink-Signal über den zweiten Träger zu übertragen.

4. Mobilkommunikationssystem nach Anspruch 3, wobei die PDCP-Layer-Funktion einen Sicherheitsprozess durchführt.

5. Mobilkommunikationssystem nach Anspruch 3 oder 4, wobei die PDCP-Layer-Funktion einen RoHC-Prozess durchführt.

6. Mobilkommunikationssystem nach Anspruch 3, wobei die Mobilstation auf den Träger zum Uplink bezogene Einstellungsinhalte entweder der ersten Funkbasisstation oder der zweiten Funkbasisstation zuordnet.

## Revendications

1. Procédé de communication mobile pour effectuer une agrégation de porteuses en utilisant une première station de base et une seconde station de base, comprenant:
une étape A dans laquelle la première station de base radio (MeNB) transmet (S1003), lorsqu'une première porteuse a été établie entre une station mobile (UE) et la première station de base radio, à la station mobile un élément d'information qui donne l'instruction d'ajouter une seconde porteuse entre la seconde station de base radio (SeNB) et de modifier les paramètres de la première porteuse ; et
une étape B dans laquelle la station mobile, conformément à l'élément d'information, modifie (S1004) les paramètres de la première porteuse et ajoute (S1005) la seconde porteuse afin de recevoir un signal de liaison descendante via la première porteuse et la seconde porteuse, et de transmettre un signal de liaison montante via soit la première porteuse, soit la seconde porteuse ;
l'étape B comprend, à la réception d'un élément d'information existant "DRB-ToAddMod" en tant que l'élément d'information et lorsque "PDCP-config" a été défini dans l'élément d'information "DRB-ToAddMod", la modification par la station mobile des paramètres de la première porteuse et l'ajout de la seconde porteuse afin de transmettre le signal de liaison montante via la seconde porteuse.

2. Procédé de communication mobile selon la revendication 1, dans lequel
l'étape A comprend la première station de base radio transmettant l'élément d'information à la station mobile par "reconfiguration de connexion RRC".

3. Système de communication mobile dans lequel une station mobile (UE) est capable d'effectuer une agrégation de porteuses en utilisant une première station de base radio (MeNB) et une seconde station de base radio (SeNB), dans lequel
lorsque l'agrégation de porteuses est effectuée, la fonction de couche PDCP correspondant à une porteuse pour une liaison descendante est définie uniquement dans la première station de base radio, et la fonction de couche PDCP correspondant à une porteuse pour une liaison montante est définie dans la première station de base radio ou la seconde station de base radio,
la première station de base radio (MeNB) est configurée pour transmettre, lorsqu'une première porteuse a été établie entre une station mobile (UE) et la première station de base radio, à la station mobile un élément d'information qui donne l'instruction d'ajouter une seconde porteuse entre la seconde station de base radio (SeNB) et de modifier les paramètres de la première porteuse ; et
la station mobile, conformément à l'élément d'information, est configurée pour modifier les paramètres de la première porteuse et pour ajouter la seconde porteuse afin de recevoir un signal de liaison descendante via la première porteuse et la seconde porteuse et afin de transmettre un signal de liaison montante via soit la première porteuse, soit la seconde porteuse, dans lequel
à la réception d'un élément d'information existant "DRB-ToAddMod" en tant que l'élément d'information et lorsque "PDCP-config" a été défini dans l'élément d'information "DRB-ToAddMod", la station mobile est configurée pour modifier les paramètres de la première porteuse et pour ajouter la seconde porteuse afin de transmettre le signal de liaison montante via la seconde porteuse.

4. Système de communication mobile selon la revendication 3, dans lequel la fonction de couche PDCP exécute un processus de sécurité.

5. Système de communication mobile selon la revendication 3 ou 4, dans lequel la fonction de couche PDCP effectue un processus RoHC.

6. Système de communication mobile selon la revendication 3, dans lequel la station mobile associe les contenus de paramètres liés à la porteuse pour une liaison montante avec soit la première station de base radio, soit la seconde station de base radio.
